# EUROPÄISCHE PATENTANMELDUNG

(11) **EP 0 837 013 A1**
(43) Veröffentlichungstag der Anmeldung: **22.04.1998**
(21) Anmeldenummer: 97112453.2
(22) Anmeldetag: 21.07.1997
(51) Int. Cl.: B65D 90/62, B65G 69/18

(54) **Dosiereinrichtung für ein mit einem Klappenventil versehenes Dosierrohr**

(30) Priorität: 18.10.1996 DE 19642969
(71) Anmelder: Buck Werke GmbH & Co, 73337 Bad Überkingen (DE)
(72) Erfinder: Koch, Martin, Dipl.-Ing., 79395 Neuenburg (DE); Untch, Günter, 79379 Müllheim (DE)
(74) Vertreter: Goddar, Heinz J., Dr.

(57) **Zusammenfassung**

Eine Dosiereinrichtung, mit einem Dosierrohr, in dem ein Klappenventil angeordnet ist, das aus einer Schließstellung, in der es im wesentlichen quer zur Längsmittelachse des Dosierrohrs steht, in eine Offenstellung, in der es im wesentlichen parallel zur Längsmittelachse des Dosierrohres steht, überführbar ist, ist dadurch gekennzeichnet, daß das Dosierrohr zumindest in axialen Abschnitten am Innenumfang mit jeweils einer Dichtung versehen ist, deren der Längsmittelachse zugewandte Kontur so gestaltet ist, daß sie der Trajektorie des Außenumfangs des Klappenventils über einen festgelegten Verstellweg des Klappenventils aus seiner Schließstellung heraus entspricht und über den festgelegten Verstellweg hinaus den Querschnitt des Dosierrohrs teilweise freigibt, und daß zumindest eine der Dichtungen zumindest in einem Bereich am Ende des festgelegten Verstellweges in Schwingungen zu versetzen ist, wobei sie während der Schwingungsbewegung von dem Außenumfang des Klappenventils intermittierend zurücktritt.

## Beschreibung

Die Erfindung betrifft eine Dosiereinrichtung, mit einem Dosierrohr, in dem ein Klappenventil angeordnet ist, das aus einer Schließstellung, in der es im wesentlichen quer zur Längsmittelachse des Dosierrohrs steht, in eine Offenstellung, in der es im wesentlichen parallel zur Längsmittelachse des Dosierrohrs steht, überführbar ist.

Einrichtungen, die nach dem eben genannten Prinzip aufgebaut sind, sind beispielsweise aus der DE 44 40 895 C1 bekannt. Mit ihnen wird eine Kupplungsverbindung zwischen zwei Behältern hergestellt, wobei in einem der Behälter befindliches Material in den anderen Behälter überführt werden soll. Oftmals ist es dabei notwendig, die zu überführende Menge mehr oder weniger genau zu dosieren.

Dazu werden Dosierschieber oder Dosierschnecken eingesetzt, die die Menge an aus dem Produktbehälter abfließendem Material einstellen sollen. Diese Dosiergeräte sind zusätzliche und damit störanfällige Komponenten, die zudem der aufwendigen Reinigung bedürfen.

Es ist eine Aufgabe der Erfindung, eine Dosiereinrichtung der eingangs genannten Gattung bereitzustellen, mit der eine Feindosierung ohne großen baulichen Aufwand möglich ist.

Diese Aufgabe wird von einer Dosiereinrichtung mit den Merkmalen des Patentanspruches 1 gelöst. Vorteilhafte Ausgestaltungen sind Gegenstand der Unteransprüche.

Erfindungsgemäß ist vorgesehen, daß das Dosierrohr zumindest in axialen Abschnitten am Innenumfang mit jeweils einer Dichtung versehen ist, deren der Längsmittelachse zugewandte Kontur so gestaltet ist, daß sie der Trajektorie des Außenumfangs des Klappenventils über einen festgelegten Verstellweg des Klappenventils aus seiner Schließstellung heraus entspricht und über den festgelegten Verstellweg hinaus den Querschnitt des Dosierrohrs zumindest teilweise freigibt, und daß zumindest eine der Dichtungen zumindest in einem Bereich am Ende des festgelegten Verstellweges in Schwingungen zu versetzen ist, wobei sie während der Schwingungsbewegung von dem Außenumfang des Klappenventils intermittierend zurücktritt. Am Ende des festgelegten Verstellweges des Klappenventils wird dann während der Schwingungsbewegung der Dichtung ein Spalt freigegeben, durch den zu dosierendes Material austreten kann. Frequenz, Dauer und Amplitude der Schwingungsbewegung legen dabei die ausdosierte Materiaimenge fest. Damit wird eine sehr genaue Feindosierung möglich.

Nach einer vorteilhaften Ausgestaltung der Dosiereinrichtung, bei der das Dosierrohr und das Klappenventil einen im wesentlichen kreisförmigen Querschnitt aufweisen, ist vorgesehen, daß die der Längsmittelachse des Dosierrohrs zugewandte Kontur jeder Dichtung kugelausschnittsförmig ist.

Wenn das Klappenventil zum Eindosieren nur in eine Richtung bewegt wird, ist es ausreichend, wenn Dichtungen bezüglich ihrer der Längsmittelachse zugewandten Kontur punktsymmetrisch zur Drehachse des Klappenventils angeordnet sind.

Wenn die Bewegung des Klappenventils in zwei Drehrichtungen möglich sein soll, ist es zweckmäßig, die Dichtung bzw. die Dichtungen bezüglich ihrer der Längsmittelachse zugewandten Kontur spiegelsymmetrisch zur Symmetrieachse des Klappenventils anzuordnen.

Um den genannten Bereich der Dichtung in Schwingungen zu versetzen, kann dieser auf der der Längsmittelachse abgewandten Seite mit gepulster Druckluft beaufschlagt werden. Als Alternative ist ein gepulstes Anwenden von Unterdruck denkbar.

Schließlich kann der schwingfähige Bereich auch kontinuierlich mit Druckluft beaufschlagt werden, welche über ein Flatterventil oder dergleichen abzuführen ist.

Nach der Erfindung braucht lediglich eine in vielen gattungsgemäßen Einrichtungen ohnehin vorhandene Dichtung so ausgestaltet zu werden, daß sie gleichzeitig eine Dosiermöglichkeit bietet. Dichtungen pneumatisch zu beaufschlagen ist dabei aus der DE 44 40 895 C1 bereits bekannt, dient dort allerdings dazu, zwei Anschluß-Rohrstutzen dicht aneinander anzuschließen.

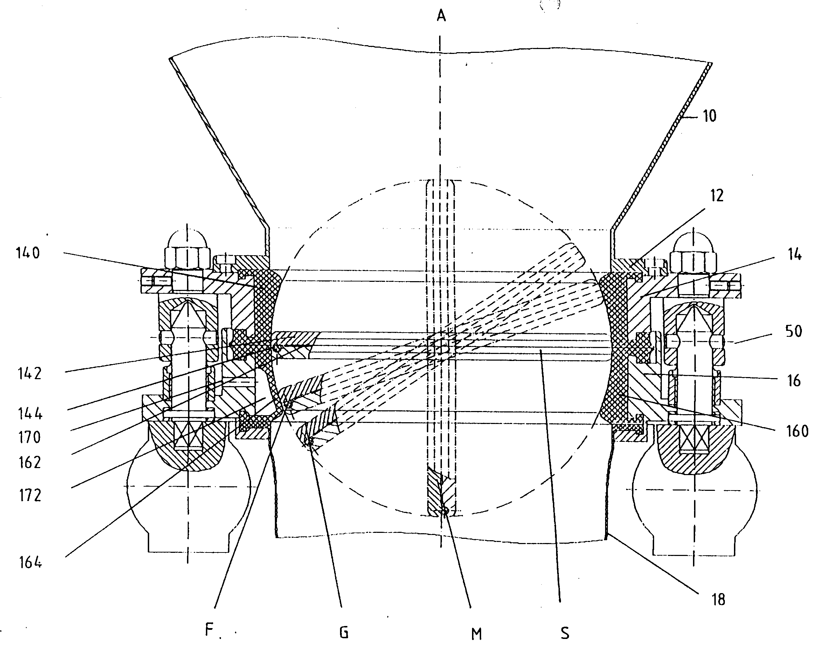

Im folgenden soll die Erfindung anhand der beigefügten Zeichnung näher erläutert werden. Dabei zeigt die einzige Zeichnungsfigur eine Schnittansicht durch eine die Längsmittelachse eines Dosierrohrs enthaltende Ebene.

In der Zeichnungsfigur ist ein trichterförmiger Behälter 10 über einen Ringflansch 12 mit einem ersten Anschluß-Rohrstutzen 14 verbunden, welcher zusammen mit einem zweiten Anschluß-Rohrstutzen 16 ein Dosierrohr gemäß der vorliegenden Erfindung bildet. Die beiden Anschluß-Rohrstutzen 14, 16 weisen an ihrer Innenwand jeweils eine Dichtung 140, 160 auf, die im folgenden noch näher beschrieben wird. Weiter ist in jedem Anschluß-Rohrstutzen 14, 16 eine Schließklappe 142 bis 162 gehalten, die zusammen das Klappenventil der vorliegenden Erfindung bilden. Diese Schließklappen 142, 162 sind, wie in der DE 43 42 962 C1 genauer beschrieben, als Halbklappen ausgebildet, von denen nur eine, beispielsweise die Schließklappe 162, auch als aktive Schließklappe bezeichnet, von einem Schwenkantrieb (in der Zeichnungsfigur nicht dargestellt) beaufschlagbar ist, und die die andere Schließklappe 142, auch als passive Schließklappe bezeichnet, bei einer Schwenkbewegung mitnimmt.

Um die beiden Anschluß-Rohrstutzen 14, 16 in der optimalen Position zusammenzuführen, sind Zentriervorrichtungen 50 vorgesehen, die hier jedoch nicht genauer beschrieben werden sollen. An den Anschluß-Rohrstutzen 16 ist eine schwimmende Lagerung 18 gelegt. Die Schließklappe ist mit einer Klappendichtung 144 versehen, die die beiden Schließklappen 142, 162 im gefügten Zustand gegeneinander abdichtet.

Das durch die Schließklappen 142, 162 gebildete Klappenventil ist in vier Positionen dargestellt, nämlich in der Schließstellung S, der Offenstellung oder Maximaldurchlaufstellung M, der Grobdosierstellung G und der Feindosierstellung F.

Die Dichtungen 140, 160 sind auf bekannte Weise an den jeweiligen Anschluß-Rohrstutzen 14, 16 festgelegt und sind bezüglich ihrer der Längsmittelachse A der Anschluß-Rohrstutzen 14, 16 zugewandten Kontur spiegelsymmetrisch zur Symmetrieachse des Klappenventils 142, 162 in der Schließstellung S angeordnet. Dabei ist der Konturverlauf der Dichtungen 140, 160 so getroffen, daß über einen bestimmten Verstellweg des Klappenventils 142, 162, nämlich von der Schließstellung S in die Feindosierstellung F im Gegenuhrzeigersinn bzw. um einen entsprechenden Verstellweg im Uhrzeigersinn den Querschnitt des Dosierrohres verschließt. Erst wenn über diesen festgelegten Verstellweg, der im Ausführungsbeispiel, als Drehwinkel ausgedrückt, etwa 20° beträgt, hinaus verfahren wird, wird der Querschnitt des Dosierrohres zumindest teilweise freigegeben. Die Dichtung 160 weist einen Bereich 164 auf, der relativ zu den übrigen Bereichen der Dichtung dünnwandig ausgebildet ist und in Schwingungen versetzt werden kann. Dazu wird beispielsweise von einer Drucklufteinrichtung (in der Zeichnungsfigur nicht dargestellt) durch eine Rohrleitung 170 pulsierend Druckluft in einen Hohlraum 172 hinter dem schwingfähigen Bereich 164 der Dichtung 160 eingeleitet, so daß, wenn sich das Klappenventil 142, 162 in der Feindosierstellung F befindet, zwischen diesem und dem schwingfähigen Bereich 164 entsprechend der aufgegebenen Schwingung ein Spalt gebildet wird, durch den das zu dosierende Material fließen kann. Anstatat mit pulsierende Druckluft kann der Hohlraum 172 auch mit pulsiert aufgegebenem Unterdruck beaufschlagt werden, ferner kann kontinuierlich eingeleitete Druckluft aus dem Hohlraum 172 durch ein Flatterventil (in der Zeichnung nicht dargestellt) ausgelassen werden, wobei sich jedesmal das gewünschte Schwingen des Bereiches 164 ergibt.

Soll nun Material abgefüllt werden, so wird das Klappenventil 142, 162 zunächst in die Maximaldurchlaufstellung M gebracht. Bevor die abzufüllende Menge ausgeflossen ist, wird, beispielsweise ansprechend auf ein Signal von einer Waage, das Klappenventil 142, 162 in eine Grobdosierstellung G gebracht, die beim gezeigten Ausführungsbeispiel bezogen auf die Schließstellung S um ca. 30° verlagert ist. In dieser Grobdosierstellung G, in der der Querschnitt des Dosierrohres nur teilweise freigegeben ist, wird weiter eindosiert, bis wiederum ansprechend auf ein Signal einer Waage das Klappenventil 142, 162 in die Feindosierstellung F geführt wird, in der das noch fehlende Gewicht fein durch den pulsierenden Spalt zwischen der Dichtung 160 und dem Klappenventil 142, 162 abgefüllt wird. Das noch fehlende Gewicht kann einfach über Dauer, Frequenz und Amplitude gesteuert werden.

In dem Bereich zwischen der Schlieflstellung S und der Feindosierstellung F bzw. in der entsprechenden Winkelstellung, wenn das Klappenventil 142, 162 im Uhrzeigersinn verschwenkt wird, ist kein Materialtransfer möglich. Die Größe dieses Winkelbereichs hängt dabei insbesondere von der Gestaltung des schwingfähigen Bereiches 164 und des Materials der Dichtung 160 ab und ist somit nicht auf die Winkelwerte ± 20° beschränkt. Auch wird die Grobdosierstellung G beispielsweise abhängig von der Rieselfähigkeit des einzudosierenden Materials gewählt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 10: Behälter
- 12: Ringflansch
- 14: Anschluß-Rohrstutzen
- 140: Dichtung
- 142: Schließklappe
- 144: Klappendichtung
- 16: Anschluß-Rohrstutzen
- 160: Dichtung
- 162: Schließklappe
- 164: Schwingfähiger Bereich
- 18: Schwimmende Lagerung
- 50: Zentriervorrichtung
- 170: Rohrleitung
- 172: Hohlraum

## Patentansprüche

1. Dosiereinrichtung, mit einem Dosierrohr, in dem ein Klappenventil angeordnet ist, das aus einer Schließstellung, in der es im wesentlichen quer zur Längsmittelachse des Dosierrohrs steht, in eine Offenstellung, in der es im wesentlichen parallel zur Längsmittelachse des Dosierrohres steht, überführbar ist,
**dadurch gekennzeichnet,** daß das Dosierrohr (14, 16) zumindest in axialen Abschnitten am Innenumfang mit jeweils einer Dichtung (140, 160) versehen ist, deren der Längsmittelachse (A) zugewandte Kontur so gestaltet ist, daß sie der Trajektorie des Außenumfangs des Klappenventils (142, 162) über einen festgelegten Verstellweg (S - F) des Klappenventils (142, 162) aus seiner Schließstellung (S) heraus entspricht und über den festgelegten Verstellweg (S - F) hinaus den Querschnitt des Dosierrohrs (14, 16) zumindest teilweise freigibt, und daß zumindest eine der Dichtungen (160) zumindest in einem Bereich (164) am Ende des festgelegten Verstellweges (S - F) in Schwingungen zu versetzen ist, wobei sie während der Schwingungebewegung von dem Außenumfang des Klappenventils (142, 162) intermittierend zurücktritt.

2. Dosiereinrichtung nach Anspruch 1, bei der das Dosierrohr und das Klappenventil einen im wesentlichen kreisförmigen Querschnitt aufweisen, dadurch gekennzeichnet, daß die der Längsmittelachse (A) des Dosierrohrs (14, 16) zugewandte Kontur jeder Dichtung (140, 160) kugelausschnittsförmig ist.

3. Dosiereinrichtung nach Anspruch 1 oder 2, dadurch gekennzeichnet, daß die Dichtungen (140, 160) bezüglich ihrer der Längsmittelachse (A) zugewandten Kontur punktsymmetrisch zur Drehachse des Klappenventils (142, 162) angeordnet sind.

4. Dosiereinrichtung nach einem der Ansprüche 1 bis 3, dadurch gekennzeichnet, daß die Dichtung(en) (140, 160) bezüglich ihrer der Längsmittelachse (A) zugewandten Kontur spiegelsymmetrisch zur Symmetrieebene des Klappenventils (142, 162) angeordnet sind.

5. Dosiereinrichtung nach einem der Ansprüche 1 bis 4, dadurch gekennzeichnet, daß der schwingfähige Bereich (164) der Dichtung (160) auf der der Längsmittelachse (A) abgewandten Seite mit gepulster Druckluft beaufschlagbar ist.

6. Dosiereinrichtung nach einem der Ansprüche 1 bis 4, dadurch gekennzeichnet, daß der schwingfähige Bereich (164) der Dichtung (160) auf der der Längsmittelachse (A) abgewandten Seite gepulst Unterdruck aussetzbar ist.

7. Dosiereinrichtung nach einem der Ansprüche 1 bis 4, dadurch gekennzeichnet, daß der schwingfähige Bereich (164) der Dichtung (60) auf der der Längsmittelachse (A) abgewandten Seite mit Druckluft beaufschlagbar ist, welche über ein Flatterventil oder dergleichen abzuführen ist.
